**Europäisches Patentamt**

**European Patent Office**

**Office européen des brevets**

(19)

(11) Numéro de publication : **0 219 362 B2**

(12) ## NOUVEAU FASCICULE DE BREVET EUROPEEN

(45) Date de publication du nouveau fascicule du brevet : **29.07.92 Bulletin 92/31**

(51) Int. Cl.⁵ : **F16F 9/02,** A47C 3/30, A47B 9/10

(21) Numéro de dépôt : **86401748.8**

(22) Date de dépôt : **05.08.86**

(54) **Ressort pneumatique blocable.**

(30) Priorité : **28.08.85 FR 8512836**

(43) Date de publication de la demande :
**22.04.87 Bulletin 87/17**

(45) Mention de la délivrance du brevet :
**26.04.89 Bulletin 89/17**

(45) Mention de la décision concernant
l'opposition :
**29.07.92 Bulletin 92/31**

(84) Etats contractants désignés :
**AT BE CH DE FR GB IT LI LU NL SE**

(56) Documents cités :
**DE-A- 1 812 282**
**DE-A- 1 931 494**

(56) Documents cités :
**DE-A- 1 951 656**
**FR-A- 2 482 436**
**JP-U-51 153 392**
**US-A- 4 465 266**

(73) Titulaire : **AIRAX**
**Z.I. Besançon-Chemaudin**
**F-25320 Montferrand-Le-Chateau (FR)**

(72) Inventeur : **Dony, Dominique**
**Braillans**
**F-25640 Roulans (FR)**
Inventeur : **Jaillet, André**
**Auxon Dessus**
**F-25870 Geneuille (FR)**

(74) Mandataire : **Colas, Jean-Pierre et al**
**Cabinet de Boisse 37, avenue Franklin D.**
**Roosevelt**
**F-75008 Paris (FR)**

EP 0 219 362 B2

## Description

La présente invention concerne les ressorts pneumatiques qui sont blocables dans des positions intermédiaires.

Ces appareils comportent comme on le sait un piston coulissant dans un cylindre et séparant celui-ci en deux chambres isolées l'une de l'autre mais que l'on peut faire communiquer entre elles, au moyen d'une valve manoeuvrable, pour modifier la position du piston, le mouvement de celui-ci étant bloqué quand ladite communication est coupée.

Des dispositifs de ce genre ont déjà été employés pour le réglage de la position de sièges ou de leur dossier, de tables, etc...

La communication entre les deux faces du piston peut être établie de diverses façons. Par exemple, dans le brevet US-A-3 407 909 qui décrit un appareil rempli de liquide ou de gaz, on a déjà proposé de réaliser cette communication par l'intervalle annulaire existant entre le cylindre où se meut le piston et un deuxième cylindre monté concentriquement avec un rayon un peu plus grand, les deux cylindres étant sertis sur les fonds à leurs extrémités.

Dans ce brevet, la valve est constituée de deux pièces concentriques, montées à rotation l'une par rapport à l'autre, et présentant des lumières qui peuvent être ouvertes ou fermées par la rotation relative des pièces. Une telle disposition n'est pas pratique dans certains cas, en particulier lorsque le ressort pneumatique est utilisé dans le pied d'un siège tournant.

Il est connu, d'un autre côté, de placer la valve sur celui des fonds du cylindre qui est opposé à la partie travaillante du piston. Le brevet FR-A-1 453 681, par exemple, décrit une valve formée d'une pièce cylindrique mobile axialement, terminée par une partie conique, laquelle coopère avec les bords d'un canal axial, qui agissent comme le siège d'une valve à pointeau. L'inconvénient d'une valve à pointeau, ou à clapet, c'est-à-dire d'une valve où l'étanchéité est obtenue par coopération de deux surfaces dont une, au moins, est conique ou plane, est qu'un déplacement relatif très faible des pièces qui coopèrent fait passer de l'ouverture à la fermeture et vice-versa. Il faut donc prévoir des moyens pour assurer de façon certaine le maintien de la valve dans la condition désirée, surtout la condition fermée. Ces moyens ont tendance à développer une force importante, qui peut détériorer à la longue les surfaces d'étanchéité.

On connaît un autre type de valves, dites valves « à tiroir » où l'étanchéité est assurée par le contact radial entre une surface cylindrique et une autre surface qui a un diamètre sensiblement égal et qui peut être également cylindrique. L'ouverture de la valve est assurée par le fait que le diamètre d'une des pièces varie à l'extrémité de la surface cylindrique, pour faire place en général à une surface conique ou plane, cette surface conique ou plane n'intervenant pas dans l'obtention de l'étanchéité. Dans une telles valves, un déplacement important de la surface cylindrique n'a pas de conséquence importante, tant que la fin de cette surface cylindrique reste écartée de la surface qui coopère avec elle, si bien que les moyens de maintien peuvent tolérer des mouvements axial importants et n'ont donc pas besoin d'une force importante.

Dans le brevet FR-A-2 025 110, on a proposé de réaliser une valve de ce type sous la forme d'une tige pouvant coulisser à travers deux fonds, se faisant face à une même extrémité du cylindre et laissant entre eux un intervalle où débouche la communication entre les deux faces du piston. Ces fonds sont respectivement munis de gorges pour le logement de joints d'étanchéité coopérant avec la tige et celle-ci comprend entre les joints une gorge annulaire dont les parois forment vers l'extérieur un évasement tronconique.

Le document JP-U-51-153.392 (D1) décrit un ressort pneumatique blocable comportant :

– un piston, qui coulisse dans un cylindre intérieur rempli de gaz sous pression et fermé à ses deux extrémités par un premier et un second fonds, le cylindre venant en appui par ses surfaces d'extrémite sur le premier et le second fond, et le volume intérieur de ce cylindre étant divisé en deux chambres séparées par le piston,

– un cylindre extérieur, fermé à ses deux extrémités par d'autres fonds fixés sur lui, et sur lesquels les fonds du cylindre intérieur viennent en appui, le tube extérieur étant coaxial au tube intérieur et définissant avec lui un espace annulaire,

– une valve qui permet la mise en communication des deux chambres à travers l'espace annulaire, cette valve comportant un tiroir coulissant qui a un profil tel que la variation de sa section entre ses extrémités est de signe constant, et dont une partie fait saillie à l'extérieur du ressort pneumatique pour sa manoeuvre.

La forme du tiroir permet des économies du fait qu'on peut le réaliser par filage ou par moulage ou frappe à froid dans un moule ou une matrice en une seule pièce, ce qui supprime la nécessité d'une opération d'usinage complémentaire. Cependant, la préparation, au niveau des fonds, de multiples surfaces d'appui entraîne des frais appréciables. En outre, c'est le tube extérieur le plus gros, donc le plus coûteux, qui supporte les efforts exercés par la pression du gaz sur les fonds correspondants et doit être exécuté en un matériau à haute résistance.

Le but de l'invention est de fournir un ressort à gaz dont l'obtention soit plus simple et moins coûteuse que dans l'art antérieur.

Pour obtenir ce résultat, l'invention fournit un ressort pneumatique blocable comportant un piston qui coulisse dans un cylindre intérieur rempli de gaz sous pression et qui divise ce cylindre en deux chambres séparées, le cylindre intérieur étant fermé à ses deux extrémités par un premier et un second fonds, un cylindre extérieur coaxial au cylindre intérieur, un intervalle annulaire ménagé entre les deux cylindres, les deux chambres pouvant communiquer entre elles par l'intermédiaire de l'intervalle annulaire et d'une valve à tiroir coulissant où l'étanchéité est obtenue par la coopération de deux surfaces mobiles l'une par rapport à l'autre et dont l'une au moins est cylindrique, comportant pour sa manoeuvre une partie faisant saillie vers l'extérieur de l'appareil, le tiroir ayant un profil tel que la variation de section entre ses deux extrémités est de signe constant,

caractérisé en ce que :

le cylindre intérieur et le cylindre extérieur sont sertis l'un sur l'autre sur les fonds du cylindre intérieur,

et un joint d'étanchéité est interposé entre les cylindres extérieur et intérieur à chaque extrémité de l'intervalle annulaire et écrasé lors du sertissage.

Dans un telle disposition, c'est le tube intérieur qui supporte principalement les efforts exercés par la pression du gaz sur les fonds et ce tube est donc fait en acier à haute résistance, tandis que le tube extérieur peut être réalisé en un matériau moins résistant.

Selon un autre perfectionnement, la collerette de grand diamètre qui termine la tige-tiroir vers l'intérieur de l'appareil est ajustée dans un logement cylindrique d'une partie solidaire du fond correspondant, en procurant ainsi un guidage supplémentaire de la tige-tiroir qui améliore la durée de vie de l'appareil. Pour permettre le passage du gaz, des rainures sont pratiquées sur la paroi de guidage cylindrique.

D'autre particularités de l'invention ressortiront de la description qui va suivre en regard du dessin donné à titre d'exemple.

La figure 1 représente un mode de réalisation d'un ressort pneumatique blocable selon l'art antérieur, la valve étant en position de fermeture, pour expliquer le fonctionnement de ladite valve.

La figure 2 est un vue de détail à plus grande échelle représentant la valve en position d'ouverture.

La figure 3 représente en coupe longitudinale un mode de réalisation de l'invention.

La figure 4 est une coupe partielle selon VI-VI.

La figure 5 représente la tige-tiroir en position d'ouverture.

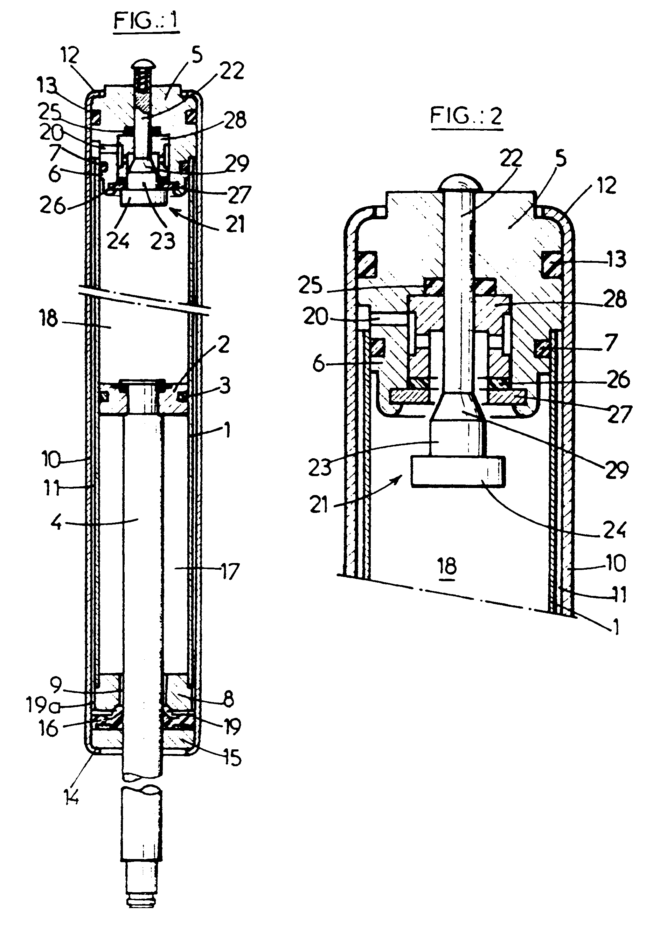

Dans le mode de réalisation connu représenté sur les figures 1 et 2, le ressort pneumatique comprend un premier cylindre 1 dans lequel peut coulisser un piston 2, muni d'une garniture d'étanchéité 3 et solidaire d'une tige 4 qui fait saillie à l'extérieur de l'appareil. A son extrémité opposé à la sortie de la tige 4, le cylindre 1 est fermé par un fond cylindrique 5 muni d'une portée 6 sur laquelle le cylindre 1 vient s'emboîter, un joint annulaire 7 assurant l'étanchéité de l'emboîtement.

A l'opposé du fond 5, le cylindre 1 est emboîté sur un demi-fond qui est traversé par la tige 4 mais qui laisse autour de la tige un jeu important 9 dont on verra l'utilité ci-après.

Autour du cylindre 1 se trouve un deuxième cylindre 10 dont le rayon interne est plus grand que le rayon externe du cylindre 1 de manière qu'il existe entre les deux cylindres un intervalle 11. Ce cylindre extérieur est serti à son extrémité 12 sur le fond avec joint d'étanchéité 13 et son autre extrémité 14 est également sertie sur un fond 15 qui est traversé par la tige 4 et qui maintient entre lui et le demi-fond 8 une rondelle de joint à lèvre 16. Ce joint dont la lèvre s'appuie sur la tige 4 assure l'étanchéité de ladite tige suivant une disposition bien connue en elle-même.

Comme le piston 2 est muni du joint d'étanchéité 3, il sépare dans le cylindre 1 deux chambres 17 et 18. Ces deux chambres ne peuvent communiquer entre elles que par le jeu 9, des rainures radiales 19 ménagées dans le demi-fond 8, des rainures longitudinales 19a du demi-fond 8, l'intervalle 11 entre les cylindres 1 et 10, le canal 20 percé dans le fond 5 et le tiroir 21 que l'on va maintenant décrire. Ce tiroir comporte 3 parties cylindriques de diamètres différents 22, 23 et 24. La partie 22 de diamètre relativement petit a la forme d'une tige qui dépasse vers l'extérieur de l'appareil à travers le fond 5 et qui sert à manoeuvrer le tiroir pour son ouverture. Elle traverse un joint d'étanchéité. 25. La partie 23 de diamètre plus grand coopère avec un joint d'étanchéité 26. Enfin la partie 24 en forme de tête plate a un diamètre assez important pour assurer que la valve se ferme quand elle est abandonnée à elle-même, sous l'effet de la pression du gaz régnant dans la chambre 18, malgré la contre-pression du gaz arrivant par le canal 20. Une plaque 27 encastrée dans le fond 5 et traversée par la partie 23 de tiroir s'appuie sur le joint d'étanchéité 26 quand la valve est fermée (position de la figure 1). Une entretoise tubulaire 28, qui peut être par exemple en matière plastique et qui est percée de canaux convenables pour le passage du gaz, maintient les joints d'étanchéité 25 et 26 à bon écartement.

La partie cylindrique 22 et 23 du tiroir sont réunies entre elles par une partie intermédiaire 29 de forme générale tronconique ou autre à profil rectiligne, ou concave ou convexe ou même étagé.

De cette inscription du tiroir, il ressort que si on le parcourt de l'une de ses extrémités à l'autre, les variations de sa section sont de signe constant. Par exemple, si on le parcourt de son extrémité supérieure à son extrémité inférieure sur la figure 1, sa section est constante ou va en croissant.

Le tiroir peut donc être obtenu par filage, par moulage, par exemple par injection ou par matriçage ou frappe à froid, avec un moule ou une matrice en une seule pièce, ne laissant donc sur le tiroir aucune trace correspondant à un plan de joint, un usinage de rectification devenant superflu, ce qui est un avanta- gle important pour l'abaissement du pris de revient.

Sur la figure 2, on voit la position de la valve quand on l'a ouverte en appuyant sur l'extrémité extérieur de la partie 22.

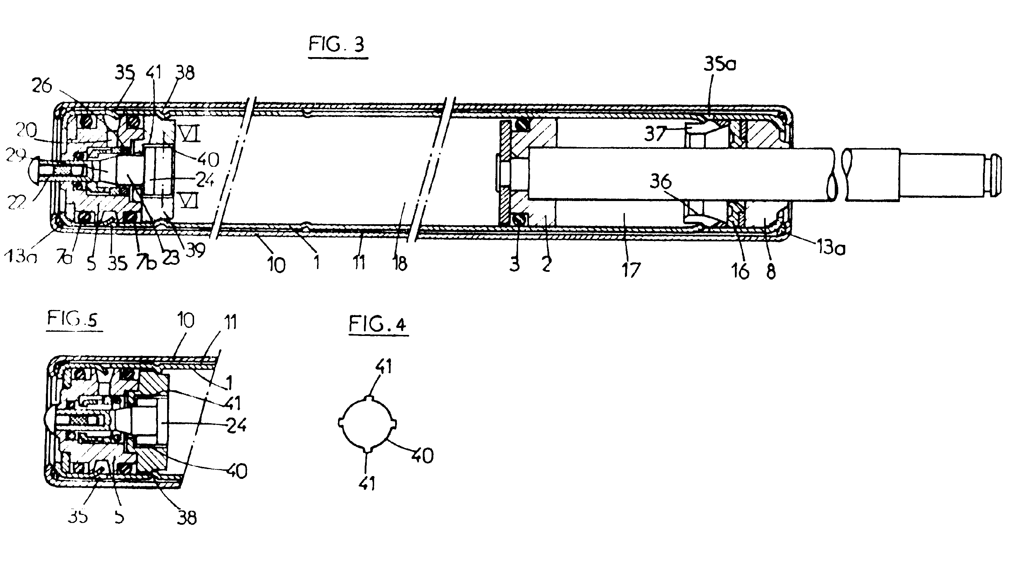

Dans le mode de réalisation selon l'invention représenté sur les figures 3 à 5, les tubes 1 et 10, qui ménagent entre eux l'intervalle 11, sont sertis l'un sur l'autre sur les fonds 5 et 8 de l'appareil, avec interposition d'un anneau d'étanchéité 13a qui est écrasé lors du sertissage. Le tube intérieur 1 maintient ainsi les fonds 5 et 8 contre la pression du gaz et il est réalisé en acier à haute résistance, tandis que le tube extérieur 10, qui supporte seulement l'effort de la pression du gaz dans l'intervalle annulaire 11, peut être en acier moins résistant. Des crevés, tels que 35, pratiqués dans le tube intérieur 1, permettent de faire communiquer l'intervalle 11 avec la canalisation 20 pratiquée dans le fond 5.

D'autres crevés 35a assurent la communication de l'intervalle 11 avec la chambre 17. Les lèvres de ces crevés servent aussi à maintenir en place un manchon 36 appliqué contre la rondelle élastique 16 du joint à lèvre assurant l'étanchéité sur la tige de piston 4. Des fentes longitudinales 37, pratiquées dans le manchon 36 au droit des crevés 35a, permettent le passage du gaz. Un rétreint 38 du tube 1 sert à maintenir en place le fond 5. Celui-ci est complété par une pièce annulaire 38, d'une certaine épaisseur, qui peut être en matière plastique et dans laquelle est pratiqué un logement cylindrique 40 ajusté à la collerette de grand diamètre 24 de la tige-tiroir. De la sorte, cette collerette est guidée dans le logement 40 lors des déplacements de la tige-tiroir, dont le guidage se trouve ainsi amélioré. La longueur de génératrice du logement cylindrique 40 est suffisante pour que dans la position finale d'ouverture de la tige-tiroir, représente sur la figure 5, la collerette 24 se trouve encore dans le logement 40. Pour le passage du gaz, des rainures 41 sont pratiquées sur la paroi du logement 40.

**Revendications**

1. Ressort pneumatique blocable comportant un piston (2) qui coulisse dans un cylindre intérieur (1) rempli de gaz sous pression et qui divise ce cylindre en deux chambres séparées (17, 18), le cylindre intérieur étant fermé à ses deux extrémités par un premier et un second fonds (5,8), un cylindre extérieur (10) coaxial au cylindre intérieur, un intervalle annulaire ménagé entre les deux cylindres (2,10), les deux chambres (17,18) pouvant communiquer entre elles par l'intermédiaire de l'intervalle annulaire et d'une valve à tiroir coulissant (22,23,24) où l'étanchéité est obtenue par la coopération de deux surfaces mobiles l'une par rapport à l'autre et dont l'une au moins est cylindrique, comportant pour sa manoeuvre une partie (22) faisant saillie vers l'extérieur de l'appareil, le tiroir ayant un profil tel que la variation de section entre ses deux extrémités est de signe constant,
caractérisé en ce que :
le cylindre intérieur (1) et le cylindre extérieur (10) sont sertis l'un sur l'autre sur les fonds (5,8)du cylindre intérieur,
et un joint d'étanchéité (13a) est interposé entre les cylindres extérieur et intérieur à chaque extrémité de l'intervalle annulaire et écrasé lors du sertissage.

2. Ressort pneumatique selon la revendication 1, caractérisé en ce que le tiroir comporte une partie cylindrique (22) de diamètre relativement petit jouant le rôle de tige de commande et une partie cylindrique (23) de diamètre plus grand coopérant avec un joint d'étanchéité annulaire (26), lesdites parties cylindriques (22, 23) étant raccordées par une partie 29 de forme générale tronconique.

3. Ressort pneumatique selon la revendication 2, caractérisé par la disposition d'une entretoise tubulaire (28) entre le joint d'étanchéité (26) coopérant avec la parti cylindrique de grand diamètre (23) du tiroir et un joint d'étanchéité (25) coopérant avec la partie cylindrique de petit diamètre du tiroir.

4. Ressort pneumatique selon l'une des revendications précédentes, caractérisé en ce que des crevés (35-35a), pratiqués sur le tube intérieur, assurent le passage du gaz vers le fond (5) muni du tiroir et du côté du fond opposé (8).

5. Ressort pneumatique selon l'une des revendications précédentes, caractérisé en ce que les fonds sont maintenus en place par des déformations locales (38) du tube intérieur.

6. Ressort pneumatique selon l'une des revendications précédentes, caractérisé en ce que la collerette de grand diamètre (24) de la tige-tiroir est ajustée dans un logement cylindrique (40), ce qui procure un deuxième point de guidage de la tige-tiroir.

7. Ressort pneumatique selon la revendication 6, caractérisé en ce que la paroi du logement cylindrique est munie de rainure (41) pour le passage du gaz.

**Patentansprüche**

1. Verriegelbare Gasfeder mit einem Kolben (2), der in einem mit unter Druck stehendem Gas gefüllten inneren Zylinder (1) gleitet und diesen Zylinder in zwei getrennte kammern (17, 18) unterteilt, wobei der innere Zylinder an seinen beiden Enden durch einen ersten und zweiten Boden (5,8) geschlossen ist, einem zu dem inneren Zylinder koaxialen äußeren Zylinder (10), einem Ringraum zwischen den beiden Zylindern (2,10), wobei die beiden kammern (17,18) miteinander über den Ringraum und ein Ventil mit gleitendem Schieber (22,23,24) in Strömungsverbindung treten können, dessen Abdichtung durch Zusammenwirken zweier relativ zueinander bewegbarer Flächen erzielt wird, von denen mindestens eine zylindrisch ausgebildet ist, mit einem zu seiner Betätigung dienenden Teil (22), das über die Außenseite der Vorrichtung vorsteht, wobei der Schieber ein solches Profil hat, daß die Änderung seines Querschnittes zwischen seinen beiden Enden ein konstantes Vorzeichen aufweist,

dadurch gekennzeichnet, daß

der innere Zylinder (1) und der äußere Zylinder (10) an den Böden (5,8) des inneren Zylinders aufeinander gebördelt sind,

und eine Dichtung (13a) zwischen dem äußeren und inneren Zylinder an jedem Ende des Ringraumes angeordnet und beim Bördeln zusammengequetscht ist.

2. Gasfeder nach Anspruch 1, dadurch gekennzeichnet, daß der Schieber einen zylindrischen Teil (22) mit relativ geringem Durchmesser, der die Aufgabe des Bedienungsschaftes erfüllt, und einen zylindrischen Teil (23) mit größerem Durchmesser aufweist, der mit einer ringförmigen Abdichtung (26) zusammenwirkt, wobei die zylindrischen Teile (22, 23) mit einem Teil (29) mit generell abgestumpfter Kegelform verbunden sind.

3. Gasfeder nach Anspruch 2, gekennzeichnet durch die Anordnung einer röhrenförmigen Versteifung (28) zwischen der Abdichtung (26), die mit dem zylindrischen Teil (23) des Schiebers mit großem Durchmesser zusammenwirkt, und eine Abdichtung (25), die mit dem zylindrischen Teil des Schiebers mit geringem Durchmesser zusammenwirkt.

4. Gasfeder nach einem der vorhergehenden Ansprüche, dadurch gekennzeichnet, daß Schlitze (35-35a), die in dem inneren Rohr vorgesehen sind, den Gasdurchgang zu dem Boden (5), der mit dem Schieber ausgerüstet ist, und zur Seite des gegenüberliegenden Bodens (8) gewährleisten.

5. Gasfeder nach einem der vorhergehenden Ansprüche, dadurch gekennzeichnet, daß die Böden durch lokale Deformationen (38) des inneren Rohres in Position gehalten werden.

6. Gasfeder nach einem der vorhergehenden Ansprüche, dadurch gekenzeichnet, daß der Flansch mit großem Durchmesser (24) des Schieberschaftes in eine zylindrische Führung (40) eingepaßt ist, wodurch ein zweiter Führungspunkt für den Schieberschaft hergestellt wird.

7. Gasfeder nach Anspruch 6, dadurch gekennzeichnet, daß die Wand der zylindrischen Führung mit Rinnen (41) versehen ist zur Gasweiterleitung.

**Claims**

1. Lockable pneumatic spring comprising a piston (2) which slides in an inner cylinder (1) filled with pressurized gas and which divides this cylinder into two separate chambers (17, 18), the inner cylinder being closed at its two ends by a first and a second endplate (5,8), an outer cylinder (10) coaxial with the inner cylinder, an annular interval formed between the two cylinders (2, 10), the two chambers (17,18) being capable of communicating mutually through the intermediary of the annular interval and of a slide valve (22,23,24) in which fluid-tightness is obtained by the cooperation of two mutually mobile surfaces, at least one of which is cylindrical, comprising, for its operation, a part (22) projecting outside the appliance, the slide having a profile such that the variation of cross-section between its two ends is of constant sign,

characterised in that :

the inner cylinder (1) and the outer cylinder (10) are clinched one upon the other on the endplates (5,8) of the inner cylinder,

and a seal element (13a) is interposed between the outer and inner cylinders at each end of the annular interval and crushed during the clinching.

2. Pneumatic spring according to Claim 1, characterised in that the slide comprises a cylindrical part (22) of relatively small diameter acting as a control rod and a cylindrical part (23) of greater diameter cooperating with an annular seal element (26), said cylindrical parts (22, 23) being connected by a part(29)of frustoconical general shape.

3. Pneumatic spring according to Claim 2, characterised in that a tubular distance piece (28) is arranged between the seal element (26) cooperating with the large-diameter cylindrical part (23) of the slide and a seal element (25) cooperating with the small-diameter cylindrical part of the slide.

4. Pneumatic spring according to any of the preceding claims, characterised in that ports (35-35a) made in the inner tube effect the passage of the gas towards the endplate (5) fitted with the slide and towards the opposite endplate (8).

5. Pneumatic spring according to any of the preceding claims, characterised in that the endplates are held in place by local deformations (38) of the inner tube.

6. Pneumatic spring according to any of the preceding claims, characterised in that the large-diameter collar (24) of the slide rod is fitted in a cylindrical housing (40), which creates a second point of guidance of the slide rod.

7. Pneumatic spring according to Claim 6, characterised in that the wall of the cylindrical housing is fitted with grooves (41) for the passage of the gas.

FIG.: 1

FIG.: 2

FIG. 3

FIG. 4

FIG. 5